# EUROPEAN PATENT APPLICATION

(11) **EP 3 907 939 A1**
(43) Date of publication of application: **10.11.2021**
(21) Application number: 19907682.9
(22) Date of filing: 01.02.2019
(51) Int. Cl.: H04L 12/721

(54) **TRAFFIC SCHEDULING METHOD AND SYSTEM**

(30) Priority: 04.01.2019 CN 201910009414
(71) Applicant: Wangsu Science & Technology Co., Ltd., Shanghai 200030 (CN)
(72) Inventor: CHEN, Zhizhong, Shanghai 200030 (CN)
(74) Representative: De Arpe Tejero, Manuel
(86) International application number: PCT/CN2019/074460
(87) International publication number: WO 2020/140311

(57) **Abstract**

The present disclosure discloses a method and system for traffic scheduling, wherein the method includes: preconfiguring policy routing in a router of a target node server; counting a current access traffic of each of a plurality of ports, and generating a traffic scheduling instruction based on the counted access traffic and the policy routing; and sending the traffic scheduling instruction to the target node server. According to technical solutions provided by the present disclosure, traffic scheduling between different ports can be implemented without modifying routing table information of a node server.

## Description

### TECHNICAL FIELD

The present disclosure relates to the field of Internet technology, and more particularly, to a method and a system for traffic scheduling.

### BACKGROUND

Border Gateway Protocol (BGP) is a routing protocol used to connect independent systems in the Internet. A computer room that realizes multi-line interconnection by adopting BGP may be referred to as a BGP computer room. When a user accesses a network application service in the BGP computer room, the fastest line may be automatically selected for the access request, and the access request may be forwarded outward through a port corresponding to the fastest line. In some scenarios, this routing method for the access request may result in unbalanced access traffic on different ports in a node server. Therefore, traffic scheduling needs to be performed between different ports to make full use of bandwidth of each port.

At present, when the traffic scheduling is performed between ports, a node server with large traffic may be identified first, and then a user access IP address corresponding to part of the traffic in the node server with larger traffic is determined. Subsequently, by modifying routing table information of the node server, the access request initiated from the user access IP address is redirected to a free port.

However, this traffic scheduling method in the prior art requires to frequently modify routing table information of the node server, which may cause network instability, thereby affecting the communication transmission quality between the node server and the user client.

### SUMMARY

An objective of the present disclosure is to provide a method and a system for traffic scheduling, which can implement traffic scheduling between different ports without modifying routing table information of a node server.

To achieve the above objective, in one aspect, the present disclosure provides a method for traffic scheduling. The method includes: preconfiguring policy routing in a router of a target node server; counting current access traffic of each of a plurality of ports, and generating a traffic scheduling instruction based on the counted access traffic and the policy routing, wherein the traffic scheduling instruction at least includes a target type of service (ToS) tag and a user IP address segment to which to-be-scheduled traffic belong; and sending the traffic scheduling instruction to the target node server.

To achieve the above objective, in another aspect, the present disclosure also provides a system for traffic scheduling. The system includes: a policy routing configuring unit, configured to preconfigure policy routing in a router of a target node server; a traffic scheduling instruction generating unit, configured to count current access traffic of each of a plurality of ports, and generate a traffic scheduling instruction based on the counted access traffic and the policy routing, wherein the traffic scheduling instruction at least includes a target ToS tag and a user IP address segment to which to-be-scheduled traffic belong; and an instruction sending unit, configured to send the traffic scheduling instruction to the target node server.

As can be seen from the above description, according to the technical solutions provided by the present disclosure, policy routing may be first configured in a router of a node server, wherein the policy routing may designate a corresponding relationship between a type of service (TOS) tag and each of the plurality of ports. Next, for to-be-scheduled traffic, a user IP address segment to which the to-be-scheduled traffic belong may be determined, and access traffic sent from the user IP address segment needs to be scheduled into a target port. There exists a corresponding relationship between the ToS tag and each of the plurality of ports, so a target ToS tag corresponding to the target port may be determined according to the corresponding relationship. Subsequently, a traffic scheduling instruction including the user IP address segment and the target ToS tag may be generated, and the traffic scheduling instruction may be sent to the node server. In this way, when the node server receives a response data packet fed back to the user, the target ToS tag may be added into the response data packet. According to a differentiated services code point (DSCP) mechanism, the router of the node server may forward the response data packet with the added target ToS tag outward through the target port based on the preconfigured policy routing, such that traffic scheduling between ports can be implemented without modifying the routing table information of the node server, and thus communication stability of the node server can be ensured.

### BRIEF DESCRIPTION OF THE DRAWINGS

To describe the technical solutions in the embodiments of the present disclosure more clearly, the following will briefly introduce the accompanying drawings required for describing the embodiments. Apparently, the accompanying drawings in the following description show merely some embodiments of the present disclosure, and to those of ordinary skills in the art, other accompanying drawings may also be derived from these accompanying drawings without creative efforts.
FIG. 1 is a schematic diagram of steps of a method for traffic scheduling according to an embodiment of the present disclosure;
FIG. 2 is a flowchart of the method for traffic scheduling according to an embodiment of the present disclosure;
FIG. 3 is a schematic diagram of a method for determining a traffic transfer-in port according to an embodiment of the present disclosure;
FIG. 4 is a schematic diagram of a method for determining whether to add a target ToS tag based on an access domain name according to an embodiment of the present disclosure; and
FIG. 5 is a schematic diagram of functional modules of a system for traffic scheduling according to an embodiment of the present disclosure.

### DETAILED DESCRIPTION

To make the objectives, technical solutions and advantages of the present disclosure clearer, embodiments of the present disclosure are further described as below in detail with reference to the accompanying drawings.

The present disclosure provides a method for traffic scheduling, which may be applied to a control center server in a border gateway protocol (BGP) computer room, wherein the control center server may be connected to each of a plurality of node servers in the BGP computer room. The node server may be provided with a router, or the node server may be connected to the router. The router can forward access traffic sent to the node server outward through a designated port.

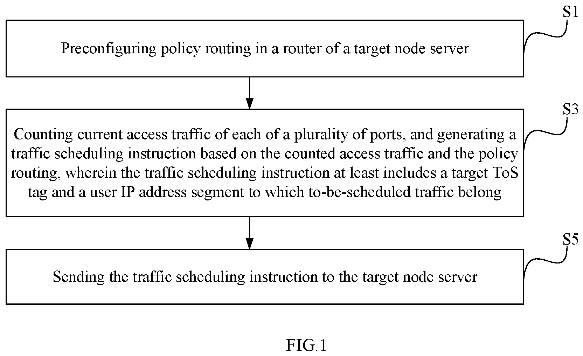

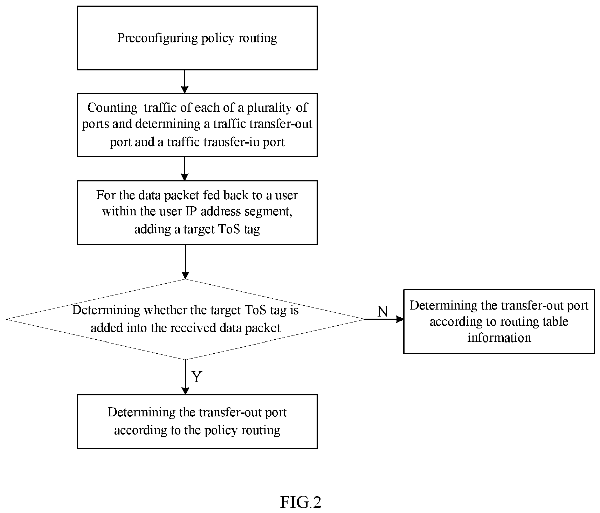

With reference to FIG. 1 and FIG. 2, the method for traffic scheduling provided by the present disclosure may include following steps.

S 1: preconfiguring policy routing in a router of a target node server.

In this embodiment, the target node server may be any node server in the BGP computer room, and preset routing table information may be configured by default in the router of the target node server. The preset routing table information may designate a corresponding relationship between an IP address of a user and a port of the router. To implement traffic scheduling between ports without modifying the preset routing table information, in this embodiment, redirection of the access traffic may be implemented through a ToS tag. Specifically, policy routing may be preconfigured in the router, wherein the policy routing may define the corresponding relationship between the ToS tag and each of a plurality of ports of the router. The ToS tag generally may be located in an IP header of a data packet, and the ToS tag may be represented by a byte in the IP header, wherein the byte includes 6 used bits and 2 unused bits. In this way, different value of 8 bits respectively to implement different ToS tags. For example, the ToS tag may be 00001000, 00010000, or 00000010, etc.

In this embodiment, the corresponding relationship between the ToS tag and each of the plurality of ports of the router may be established. For example, if the number of currently usable ToS tags is 100 in total and the number of the ports of the router is 10, the corresponding relationships between the 100 ToS tags and the 10 ports may be established. The data packet carrying the ToS tag has a higher routing priority than a routing method defined in the preset routing table information, so in this embodiment, a transfer-out port of the data packet may be redetermined by adding a ToS tag into the data packet.

S3: counting current access traffic of each of the plurality of ports, and generating a traffic scheduling instruction based on the counted access traffic and the policy routing, wherein the traffic scheduling instruction at least includes a target ToS tag and a user IP address segment to which to-be-scheduled traffic belong.

In this embodiment, the current access traffic of each of the plurality of ports may be counted to determine which ports the access traffic need to be transferred out and which ports may receive the transferred traffic. Specifically, information of each access data packet received by the target node server may be recorded in an access traffic diary of the target node server. The information of the access data packet may include a data size of the access data packet, may also include an IP address of a user sending the access data packet, may further include access domain names to which the access data packet is directed, and may also further include information indicating whether the access data packet carries the ToS tag, etc.

In this embodiment, the access traffic diary of the target node server may be read, and the information of each access data packet in the access traffic diary may be traversed. If the access data packet does not carry the ToS tag, this means that the access data packet may determine the transfer-out port according to the preset routing table information. Therefore, the port corresponding to the IP address of the user sending the access data packet may be searched according to the preset routing table information of the target node server, and the data size of the access data packet is counted into the access traffic of the searched port. However, if the access data packet carries the ToS tag, since the routing priority of the ToS tag is higher than that of the preset routing table information, the transfer-out port of the access data packet should be determined according to the aforementioned policy routing. Therefore, the port corresponding to the carried ToS tag may be searched according to the policy routing, and the data size of the access data packet is counted into the access traffic of the searched port. In this way, no matter whether the access data packet carries a ToS tag, the data size of the access data packet may be correctly counted into the corresponding port.

In this embodiment, after the current access traffic of each of the plurality of ports is determined, a traffic transfer-out port and a traffic transfer-in port may be determined from the plurality of ports of the router according to the counted access traffic. The traffic transfer-out port may be a port with higher current access traffic, and the traffic transfer-in port may be a port with lower current access traffic. Specifically, in practical applications, a bandwidth utilization rate of each of the plurality of ports may be calculated according to the counted access traffic. The bandwidth utilization rate may be a ratio of the current access traffic on a port to a total bandwidth of the port. The higher the bandwidth utilization rate is, the higher the load of the port is. Next, a port whose bandwidth utilization rate is greater than or equal to a first utilization rate threshold may be determined as the traffic transfer-out port, and a port whose bandwidth utilization rate is less than or equal to a second utilization rate threshold may be determined as the traffic transfer-in port. Wherein, the first utilization rate threshold generally is greater than the second utilization rate threshold, and specific values of the first utilization rate threshold and the second utilization rate threshold may be flexibly adjusted according to actual conditions.

In this embodiment, after the traffic transfer-out port is determined, the to-be-scheduled traffic may be determined from the access traffic of the traffic transfer-out port, and the user IP address segment to which the to-be-scheduled traffic belong may be identified. Specifically, the to-be-scheduled traffic may be part of the access traffic in the traffic transfer-out port. For example, the to-be-scheduled traffic may be 30% of the access traffic in the traffic transfer-out port. By searching the access traffic diary, the user IP address segment to which the to-be-scheduled traffic belong may be determined. The user IP address segment may be a set of user IP addresses corresponding to the to-be-scheduled traffic, and the user IP address segment may include independent IP addresses, and also include a continuous segment of IP addresses. After the user IP address segment is identified, it is indicated that access data packets subsequently fed back to users within the user IP address segment may be scheduled to the traffic transfer-in port. Specifically, the target ToS tag corresponding to the traffic transfer-in port may be searched according to the policy routing. Subsequently, these access data packets may be scheduled to the traffic transfer-in port as long as the target ToS tag is added into these access data packets.

In this embodiment, after determining the target ToS tag and the user IP address segment, the control center server may generate a traffic scheduling instruction including the user IP address segment and the target ToS tag.

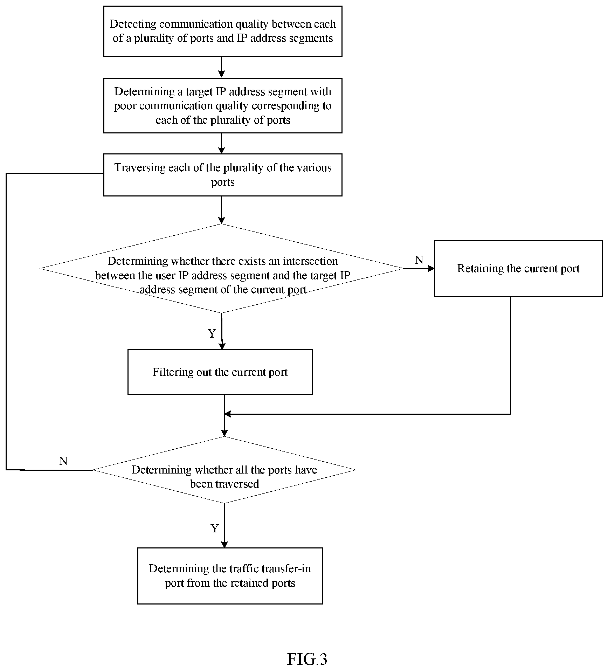

It should be noted that, in some scenarios, some ports in the router may have poor communication quality for specific IP addresses. If the user IP address segment corresponding to the to-be-scheduled traffic includes these specific IP addresses, these ports with poor communication quality should be filtered out when selecting the traffic transfer-in port. Specifically, with reference to FIG. 3, the communication quality between each of the plurality of ports and IP address segments may be first detected, and a target IP address segment corresponding to each of the plurality of ports, in which the communication quality is lower than a preset quality index, is determined. Wherein, the preset quality index may be an index comprehensively determined based on parameters such as delay, packet loss rate, and connection failure rate, etc. In this way, the target IP address segment with poor communication quality may be determined for each of the plurality of ports. Next, each of the plurality of ports may be traversed when the traffic transfer-in port is determined. If there exists an intersection between the target IP address segment with poor communication quality corresponding to the current port and the user IP address segment to which the to-be-scheduled traffic belong, it indicates that if the to-be-scheduled traffic is allocated to the current port, the user's communication experience may be affected. In this case, the current port may be excluded from the plurality of ports, and the traffic transfer-in port may be determined from remaining ports in the plurality of ports.

S5: sending the traffic scheduling instruction to the target node server.

In this embodiment, after generating the traffic scheduling instruction, the control center server may send the traffic scheduling instruction to the target node server, such that a haproxy module in the target node server can process the traffic scheduling instruction. Specifically, when the target node server receives a response data packet fed back to the user within the user IP address segment, the haproxy module may add the target ToS tag into the response data packet. In this way, after the response data packet with the added target ToS tag arrives at the router of the target node server, the router may determine a target port corresponding to the target ToS tag according to the policy routing, and thus may forward the response data packet with the added target ToS tag outward through the target port.

In one embodiment, for a data packet with no ToS tag added, it means that there is no need to reselect a port for the data packet, and this data packet may be forwarded through a port defined in the preset routing table information or in the routing table information broadcasted from a network. Therefore, the router may forward the data packet with no ToS tag outward through the port designated in the preset routing table information or the routing table information broadcasted from the network.

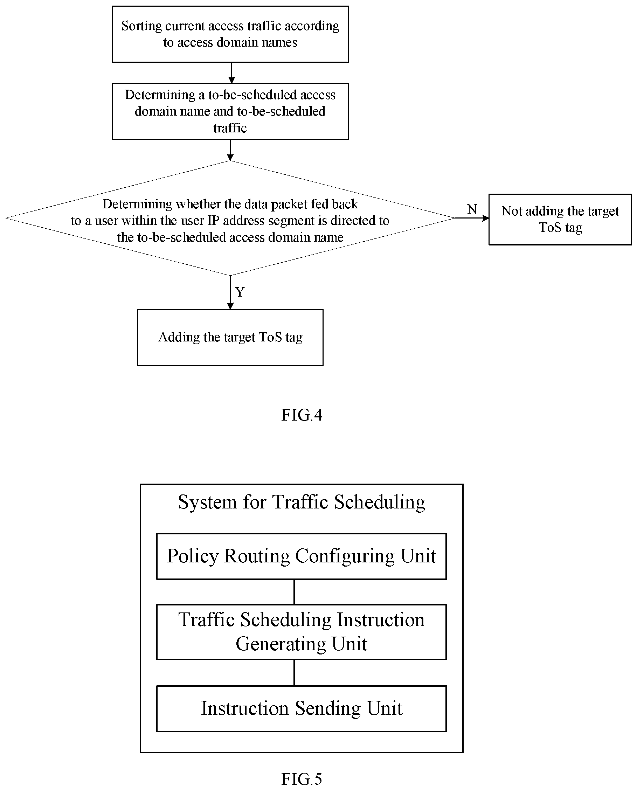

With reference to FIG. 4, in one embodiment, traffic scheduling may also be performed according to the access domain names. Specifically, after the current access traffic of each of the plurality of ports is counted, for the each of the plurality of ports in the router, the current access traffic of the port may be divided according to the access domain names, and the access traffic of each of the access domain names in the port may be sorted . In this way, the access domain names with higher access traffic in the port may be determined. Next, when performing traffic scheduling, a traffic transfer-out port may be first determined according to the above method, and then a to-be-scheduled access domain name and to-be-scheduled traffic corresponding to the to-be-scheduled access domain name may be determined according to a sorting result of the access traffic of each of the access domain names in the traffic transfer-out port. Specifically, one or more top-ranked access domain names may be determined as the to-be-scheduled access domain name(s). Next, for each of the to-be-scheduled access domain names, part of the access traffic may be determined as the to-be-scheduled traffic. For example, 30% of the access traffic under the access domain name with the highest access traffic in the current port may be determined as the to-be-scheduled traffic. In this way, when traffic scheduling is performed subsequently, only the access traffic of the to-be-scheduled access domain name(s) is scheduled. For example, an IP address of a certain user is within a to-be-scheduled user IP address segment, but the access data packet fed back to the IP address of the user may be directed to different access domain names, wherein it needs to perform traffic scheduling on certain access domain names, whereas it does not need to perform traffic scheduling on some access domain names. In view of this, the traffic scheduling instruction generated by the control center server further includes the to-be-scheduled access domain name(s). In this way, when the target node server receives a data packet fed back to the user within the to-be-scheduled user IP address segment, it may determine whether the data packet is directed to the to-be-scheduled access domain name(s). If the data packet is directed to the to-be-scheduled access domain name(s), the traffic scheduling is performed on the data packet, such that the target ToS tag is added into the data packet. If the data packet is not directed to the to-be-scheduled access domain name(s), it does not need to perform the traffic scheduling on the data packet. Therefore, in this case, the target ToS tag may be not added into the data packet.

In this way, subsequently the router may determine the transfer-out port of the data packet according to the policy routing or preset routing table information based on a fact whether the data packet carries the ToS tag.

The present disclosure also provides a system for traffic scheduling. With reference to FIG. 5, the system includes:
a policy routing configuring unit, configured to preconfigure policy routing in a router of a target node server;
a traffic scheduling instruction generating unit, configured to count current access traffic of each of a plurality of ports, and generate a traffic scheduling instruction based on the counted access traffic and the policy routing, wherein the traffic scheduling instruction at least includes a target ToS tag and a user IP address segment to which to-be-scheduled traffic belong; and
an instruction sending unit, configured to send the traffic scheduling instruction to the target node server.

In one embodiment, the traffic scheduling instruction generating unit includes:
an access traffic diary reading module, configured to read an access traffic diary of the target node server, the access traffic diary being configured for recording information of an access data packet, the information of the access data packet comprising a data size of the access data packet and an IP address of a user sending the access data packet; and
a traffic counting module, configured to search a port corresponding to the IP address of the user sending the access data packet according to routing table information of the target node server and count the data size of the access data packet into the access traffic of the searched port if the access data packet does not carry a ToS tag, and search a port corresponding to the ToS tag according to the policy routing and count the data size of the access data packet into the access traffic of the searched port if the access data packet carries the ToS tag.

In one embodiment, the information of the access data packet further includes access domain names to which the access data packet is directed. Correspondingly, the traffic scheduling instruction generating unit further includes:
a domain name dividing module, configured to divide, for each of the plurality of ports in the router, current access traffic of the port according to the access domain names, and sort the access traffic of each of the access domain names in the port.

In one embodiment, the traffic scheduling instruction generating unit further includes:
a traffic transfer-out port determining module, configured to determine a traffic transfer-out port from the plurality of ports of the router according to the counted access traffic;
a to-be-scheduled traffic determining module, configured to determine a to-be-scheduled access domain name and to-be-scheduled traffic corresponding to the to-be-scheduled access domain name according to a sorting result of the access traffic of each of the access domain names in the traffic transfer-out port.

In one embodiment, the traffic scheduling instruction generating unit includes:
a traffic transfer-out port determining module, configured to determine a traffic transfer-out port from the plurality of ports of the router according to the counted access traffic;
an address segment identifying module, configured to determine the to-be-scheduled traffic from the access traffic of the traffic transfer-out port, and identify the user IP address segment to which the to-be-scheduled traffic belong;
a searching module, configured to determine a traffic transfer-in port from the plurality of ports of the router according to the counted access traffic, and search a target ToS tag of the traffic transfer-in port according to the policy routing; and
an instruction generating module, configured to generate the traffic scheduling instruction including the user IP address segment and the target ToS tag.

In one embodiment, the traffic scheduling instruction generating unit further includes:
a communication quality detecting module, configured to detect communication quality between each of the plurality of ports and IP address segments, and determine a target IP address segment corresponding to each of the plurality of ports, in which the communication quality is lower than a preset quality index.

Correspondingly, the searching module is further configured to traverse each of the plurality of ports, exclude a current port from the plurality of ports and determine the traffic transfer-in port from remaining ports in the plurality of ports if there exists an intersection between the target IP address segment corresponding to the current port and the user IP address segment to which the to-be-scheduled traffic belong.

It should be noted that reference may be made to the description of the method embodiments for the specific embodiments of the system for traffic scheduling in this specification, and thus repeated description is omitted herein.

As can be seen from the above description, according to the technical solutions provided by the present disclosure, policy routing may be first configured in a router of a node server, wherein the policy routing may designate a corresponding relationship between a TOS tag and each of the plurality of ports. Next, for to-be-scheduled traffic, a user IP address segment to which the to-be-scheduled traffic belong may be determined, and access traffic sent from the user IP address segment needs to be scheduled into a target port. There exists a corresponding relationship between the ToS tag and each of the plurality of ports, so a target ToS tag corresponding to the target port may be determined according to the corresponding relationship. Subsequently, a traffic scheduling instruction including the user IP address segment and the target ToS tag may be generated, and the traffic scheduling instruction may be sent to the node server. In this way, when the node server receives a response data packet fed back to the user, the target ToS tag may be added into the response data packet. According to a differentiated services code point (DSCP) mechanism, the router of the node server may forward the response data packet with the added target ToS tag outward through the target port based on the preconfigured policy routing, such that traffic scheduling between ports can be implemented without modifying routing table information of the node server, and thus the communication stability of the node server can be ensured.

From the description of the foregoing embodiments, those skilled in the art may clearly know that the various embodiments may be implemented in the form of software with a necessary general hardware platform, or implemented in the form of hardware. Based on such an understanding, the above technical solutions in essence or that part of contribution to the prior art may be embodied in the form of software products, which may be stored in computer-readable storage media, such as a ROM/RAM, a diskette or an optical disk and the like, including some instructions to direct a computing device (may be a personal computer, a server, or a network device, etc.) to implement each embodiment or methods described in some parts of the embodiments.

The foregoing descriptions are merely preferred embodiments of the present disclosure, and are not intended to limit the present disclosure. Any modification, equivalent replacement and improvement made within the spirit and principle of the present disclosure shall fall into the protection scope of the present disclosure.

## Claims

1. A method for traffic scheduling, comprising:
preconfiguring policy routing in a router of a target node server;
counting current access traffic of each of a plurality of ports, and generating a traffic scheduling instruction based on the counted access traffic and the policy routing, the traffic scheduling instruction at least comprising a target type of service (ToS) tag and a user IP address segment to which to-be-scheduled traffic belong; and
sending the traffic scheduling instruction to the target node server.

2. The method according to claim 1, wherein the counting current access traffic of each of the plurality of ports comprises:
reading an access traffic diary of the target node server, the access traffic diary being configured for recording information of an access data packet, the information of the access data packet comprising a data size of the access data packet and an IP address of a user sending the access data packet;
when the access data packet does not carry a ToS tag, searching, according to routing table information of the target node server, a port corresponding to the IP address of the user sending the access data packet, and counting the data size of the access data packet into access traffic of the searched port; and
when the access data packet carries the ToS tag, searching, according to the policy routing, a port corresponding to the ToS tag, and counting the data size of the access data packet into the access traffic of the searched port.

3. The method according to claim 2, wherein the generating a traffic scheduling instruction based on the counted access traffic and the policy routing comprises:
determining a traffic transfer-out port from the plurality of ports of the router according to the counted access traffic;
determining to-be-scheduled traffic from the access traffic of the traffic transfer-out port, and identifying the user IP address segment to which the to-be-scheduled traffic belong;
determining a traffic transfer-in port from the plurality of ports of the router according to the counted access traffic, and searching a target ToS tag of the traffic transfer-in port according to the policy routing; and
generating the traffic scheduling instruction including the user IP address segment and the target ToS tag.

4. The method according to claim 3, wherein the determining a traffic transfer-out port and a traffic transfer-in port from the plurality of ports of the router comprises:
calculating a bandwidth utilization rate of each of the plurality of ports according to the counted access traffic, determining a port whose bandwidth utilization rate is greater than or equal to a first utilization rate threshold as the traffic transfer-out port, and determining a port whose bandwidth utilization rate is less than or equal to a second utilization rate threshold as the traffic transfer-in port.

5. The method according to claim 3, wherein before determining the traffic transfer-out port, the method further comprises:
detecting communication quality between each of the plurality of ports and IP address segments, and determining a target IP address segment corresponding to each of the plurality of ports, in which communication quality is lower than a preset quality index;
correspondingly, the determining a traffic transfer-in port from the plurality of ports of the router comprises:
traversing each of the plurality of ports, excluding a current port from the plurality of ports and determining the traffic transfer-in port from remaining ports in the plurality of ports when there exists an intersection between the target IP address segment corresponding to the current port and the user IP address segment to which the to-be-scheduled traffic belong.

6. The method according to claim 2, wherein the information of the access data packet further comprises access domain names to which the access data packet is directed; and correspondingly, after counting current access traffic of each of the plurality of ports, the method further comprises:
for each of the plurality of ports in the router, dividing the current access traffic of the port according to the access domain names, and sorting the access traffic of each of the access domain names in the port.

7. The method according to claim 6, further comprising:
determining a traffic transfer-out port from the plurality of ports of the router according to the counted access traffic;
determining, according to a sorting result of the access traffic of each of the access domain names in the traffic transfer-out port, a to-be-scheduled access domain name and to-be-scheduled traffic corresponding to the to-be-scheduled access domain name; and
correspondingly, the generated traffic scheduling instruction further comprising the to-be-scheduled access domain name.

8. The method according to claim 7, further comprising:
determining, by the target node server when receiving a response data packet fed back to a user, whether the response data packet is directed to the to-be-scheduled access domain name, adding the target ToS tag into the response data packet when the response data packet is directed to the to-be-scheduled access domain name, otherwise not adding the target ToS tag into the response data packet.

9. The method according to claim 1, further comprising:
for a data packet which no ToS tag is added, forwarding outward, by the router, the data packet which no ToS tag is added according to a port designated by the routing table information.

10. A system for traffic scheduling comprising:
a policy routing configuring unit, configured to preconfigure policy routing in a router of a target node server;
a traffic scheduling instruction generating unit, configured to count current access traffic of each of plurality of ports, and generate a traffic scheduling instruction based on the counted access traffic and the policy routing, the traffic scheduling instruction at least comprising a target ToS tag and a user IP address segment to which to-be-scheduled traffic belong; and
an instruction sending unit, configured to send the traffic scheduling instruction to the target node server.

11. The system according to claim 10, wherein the traffic scheduling instruction generating unit comprises:
an access traffic diary reading module, configured to read an access traffic diary of the target node server, the access traffic diary being configured for recording information of an access data packet, the information of the access data packet comprising a data size of the access data packet and an IP address of a user sending the access data packet; and
a traffic counting module, configured to search a port corresponding to the IP address of the user sending the access data packet according to routing table information of the target node server and count the data size of the access data packet into the access traffic of the searched port when the access data packet does not carry a ToS tag, and search a port corresponding to the ToS tag according to the policy routing and count the data size of the access data packet into the access traffic of the searched port when the access data packet carries the ToS tag.

12. The system according to claim 11, wherein the information of the access data packet further comprises access domain names to which the access data packet is directed; and correspondingly the traffic scheduling instruction generating unit further comprises:
a domain name dividing module, configured to divide, for each of the plurality of ports in the router, the current access traffic of the port according to the access domain names, and sort the access traffic of each of the access domain names in the port.

13. The system according to claim 12, wherein the traffic scheduling instruction generating unit further comprises:
a traffic transfer-out port determining module, configured to determine a traffic transfer-out port from the plurality of ports of the router according to the counted access traffic; and
a to-be-scheduled traffic determining module, configured to determine a to-be-scheduled access domain name and to-be-scheduled traffic corresponding to the to-be-scheduled access domain name according to a sorting result of the access traffic of each of the access domain names in the traffic transfer-out port.

14. The system according to claim 11, wherein the traffic scheduling instruction generating unit comprises:
a traffic transfer-out port determining module, configured to determine a traffic transfer-out port from the plurality of ports of the router according to the counted access traffic;
an address segment identifying module, configured to determine to-be-scheduled traffic from the access traffic of the traffic transfer-out port, and identify the user IP address segment to which the to-be-scheduled traffic belong;
a searching module, configured to determine a traffic transfer-in port from the plurality of ports of the router according to the counted access traffic, and search a target ToS tag of the traffic transfer-in port according to the policy routing; and
an instruction generating module, configured to generate the traffic scheduling instruction including the user IP address segment and the target ToS tag.

15. The system according to claim 14, wherein the traffic scheduling instruction generating unit further comprises:
a communication quality detecting module, configured to detect communication quality between each of the plurality of ports and IP address segments, and determine a target IP address segment corresponding to each of the plurality of ports, in which communication quality is lower than a preset quality index;
correspondingly, the searching module is further configured to traverse each of the plurality of ports, exclude a current port from the plurality of ports and determine the traffic transfer-in port from remaining ports in the plurality of ports when there exists an intersection between the target IP address segment corresponding to the current port and the user IP address segment to which the to-be-scheduled traffic belong.
